# EUROPEAN PATENT APPLICATION

(11) **EP 4 484 105 A1**
(43) Date of publication of application: **01.01.2025**
(21) Application number: 22957150.0
(22) Date of filing: 09.11.2022
(51) Int. Cl.: B29B 9/12, B29B 9/06, B29B 9/16

(54) **GRANULATION PROCESSING METHOD FOR DEGRADABLE MATERIAL AND FORMED BODY PREPARED THEREBY**

(30) Priority: 02.09.2022 CN 202211068431
(71) Applicant: Shanghai Bluepha Microbiology Technology Co., Ltd., Shanghai 200072 (CN); Jiangsu Lansu Biomaterial Co., Ltd., Yancheng, Jiangsu 224500 (CN)
(72) Inventor: XU, Yong, Beijing 102206 (CN); MA, Zhiyu, Beijing 102206 (CN); MA, Yiming, Beijing 102206 (CN); LI, Teng, Beijing 102206 (CN); ZHANG, Haoqian, Beijing 102206 (CN)
(74) Representative: Michalski Hüttermann & Partner Patentanwälte mbB
(86) International application number: PCT/CN2022/130884
(87) International publication number: WO 2024/045338

(57) **Abstract**

The present invention relates to the technical field of processing of degradable materials, and in particular relates to a granulation processing method for a degradable material and a formed body prepared thereby. The method comprises: after a polyhydroxyalkanoate powder is melted, pre-crystallizing same at a temperature of 20-60°C below the Tm of polyhydroxyalkanoate, and then extruding, crystallizing and granulating same. In the granulation processing method of the present invention, pre-crystallization is performed at a temperature of 20-60°C below the Tm of polyhydroxyalkanoate, followed by extrusion, such that the crystallization speed can be accelerated online, non-sticky particles can be quickly obtained and the crystallization time is greatly shortened under the condition that no auxiliary agent is added, thereby facilitating transportation and subsequent processing. In addition, the method of the present invention does not need to change the current extrusion granulation equipment, so that the equipment cost is not additionally increased; and due to a lower processing temperature, the electrical heating power and the heat exchange power are reduced, thereby rendering the energy consumption lower and facilitating popularization and application in actual production.

## Description

### Cross-reference to related application

The present application claims priority to Chinese Patent Application No. 2022110684312, entitled "granulation processing method for degradable material and formed body prepared thereby", filed on September 2, 2022, and the entire disclosure of which is incorporated herein by reference in its entirety.

### Technical Field

The present application relates to the technical field of processing degradable materials, specifically, to a granulation processing method of degradable materials and a molded body prepared therefrom.

### Background Art

Polyhydroxyalkanoate (hereinafter referred to as PHA) is a bio-based and biodegradable polymer in the marine environment that can solve environmental problems caused by waste plastics and has excellent biocompatibility and mechanical properties, and thus has broad application prospects in the fields of packaging and biomedicine. Bio-based PHA is produced by bacteria through processes such as fermentation, extraction, centrifugation, drying, and crushing to produce powder. The powder is not convenient for transportation and processing, therefore, it needs to be further made into granules. The existing granulation means include agglomeration granulation, extrusion granulation, jet granulation and the like, wherein twin-screw granulation is the most common extrusion granulation and also the mainstream granulation process in the current market.

At present, the commonly used technical route for extrusion granulation is the process of melt extrusion in a twin-screw extruder, followed by cooling and granulation of the extruded melt.

However, in the extrusion granulation process of PHA powder using traditional parameters, rapid cooling is not possible during melt extrusion, which will increase the subsequent heat treatment equipment with high energy consumption, the factory area, and energy consumption.

Additionally, according to the traditional logic of granulation, currently, the common twin-screw granulation process uses previous parameters of the granulation process in process parameter settings, and the extruded melt cannot crystallize quickly, leading to granule adhesion and failure to form a good pure material granule state. There are also existing technologies that add additives to improve the above problems during granulation. However, it is not possible to obtain pure granules of PHA after adding additives, and the application scalability of PHA resins will be reduced compared to pure materials without addition, especially, since many additives will affect the appearance, color, and transparency of the resins, and meanwhile, processing costs also increase.

### Summary

In order to solve the above technical problems, the present application explores and provides a granulation processing method for degradable materials and molded body prepared therefrom.

Specifically, the present application first provides a granulation processing method of degradable materials, including:
melting polyhydroxyalkanoate, then subjecting the resultant to pre-crystallization at a temperature of 20°C below the Tm (melting temperature) of the PHA to 60°C below the Tm of the PHA, and then subjecting the resultant to extrusion for crystallization and granulation.

The present application finds that pre-crystallization in the above manner has advantages in accelerating the speed of crystallization online during extrusion through screw granulation equipment, rapidly cooling the obtained granules, thereby greatly improving the granule state and reducing the energy consumption of processing. Moreover, no additional additive is required to achieve the above effects, which is also beneficial for controlling processing costs. The present application also finds that when the pre-crystallization temperature is 60°C below the Tm, the morphological characteristics of the prepared granules are uneven. Therefore, the pre-crystallization temperature is selected from 20°C below the Tm to 60°C below the Tm.

Preferably, the pre-crystallization is carried out at 20°C below the Tm of the PHA to 55°C below the Tm of the PHA.

More preferably, the pre-crystallization is carried out at 20°C below the Tm of the PHA to 50°C below the Tm of the PHA.

Further preferably, the pre-crystallization is carried out at 20°C below the Tm of the PHA to 40°C below the Tm of the PHA.

Specifically, and non-restrictively, for PHBH, pre-crystallization can be carried out at 20°C below the Tm to 40°C below the Tm. For example, pre-crystallization can be carried out at temperatures between 100°C to 140°C, or temperatures, for example, 20°C below the Tm, 25°C below the Tm, 30°C below the Tm, 40°C below the Tm. For PHB, pre-crystallization is carried out at 40°C below the Tm to 60°C below the Tm, such as a pre-crystallization temperature of 40°C below the Tm to 50°C below the Tm, or 40°C below the Tm, 45°C below the Tm, 50°C below the Tm. For PHBV, pre-crystallization is carried out at 35°C below the Tm to 55°C below the Tm, such as a pre-crystallization temperature of 35°C below the Tm to 50°C below the Tm, or 35°C below the Tm, 45°C below the Tm, 50°C below the Tm.

In the present application, the PHA can be a polymer or a mixture of two or more polymers.

In specific embodiments, a person skilled in the art can adjust the temperature of pre-crystallization according to different monomers and PHA materials with different monomer ratios.

Non-restrictively, for PHBH, pre-crystallization is carried out at temperatures between 100°C to 120°C, and the preferred pre-crystallization temperatures can be 100°C, 110°C, 115°C, and 120°C. For PHB, pre-crystallization is carried out at temperatures between 110°C to 130°C, and the preferred pre-crystallization temperatures can be 110°C, 120°C, and 130°C. For PHBV, pre-crystallization is carried out at temperatures between 120°C to 140°C, and the preferred pre-crystallization temperatures can be 120°C, 125°C, 130°C, 135°C, and 140°C.

In the present application, the PHA is a polyhydroxyalkanoate-based material, which can be a single polymer or a combination of two or more polymers.

Furthermore, the PHA can be selected from raw materials commonly used in the art, such as polymers containing 3-hydroxyalkanoate structural unit and/or 4-hydroxyalkanoate structural unit. Specifically, the PHA is a polymer containing the structural unit represented by the following Formula (1):

[CHRCH₂COO] (1)

In Formula (1), R is the alkyl group shown in CₚH₂ₚ₊₁, and p is an integer from 1 to 15; preferably an integer of 1 to 10, more preferably an integer of 1 to 8.

R is a straight-chain or branched alkyl group of C₁-C₆. For example, methyl, ethyl, propyl, butyl, isobutyl, tertbutyl, pentyl, hexyl and the like.

In the composition, the PHA comprises at least one poly(3-hydroxyalkanoate).

Preferably, the PHA is a polymer containing a 3-hydroxybutyrate structural unit;
wherein, the polymer containing a 3-hydroxybutyrate structural unit is a homopolymer containing only a 3-hydroxybutyrate structural unit, or a copolymer containing a 3-hydroxybutyrate structural unit and other alkanoate structural unit;
the other alkanoate structural unit is at least one selected from 3-hydroxypropionate, 3-hydroxyvalerate, 3-hydroxycaproate, 3-hydroxyheptanoate, 3-hydroxyoctanoate, 3-hydroxynonanoate, 3-hydroxydecanoate, 3-hydroxyundecanoate and 4-hydroxybutyrate.

More preferably, the PHA is at least one selected from poly(3-hydroxybutyrate), poly(3-hydroxybutyrate-co-3-hydroxypropionate), poly(3-hydroxybutyrate-co-3-hydroxyvalerate) (abbreviation: P3HB3HV, PHBV), poly(3-hydroxybutyrate-co-3-hydroxyvalerate-co-3-hydroxycaproate), poly(3-hydroxybutyrate-co-3-hydroxycaproate) (abbreviation: P3HB3HH, PHBH), poly (3 -hydroxybutyrate-co-3 -hydroxyheptanoate), poly (3 -hydroxybutyrate-co-3 - hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) (abbreviation: P3HB4HB, P34HB).

Further preferably, the PHA is poly(3-hydroxybutyrate-co-3-hydroxycaproate).

When the PHA is poly(3-hydroxybutyrate-co-3-hydroxycaproate), the pre-crystallization is preferably carried out at 100°C to 120°C.

As a preferred solution, the PHA contains a 3-hydroxybutyrate structural unit, and the average content of the 3-hydroxybutyrate structural unit is more than 50 mol%.

As a specific example of PHA, the poly(3-hydroxyalkanoate) comprises a copolymer of 3-hydroxybutyrate structural unit and other structural unit, wherein the average content ratio of the 3-hydroxybutyrate structural unit to other structural unit is 50/50 to 99/1 (mol%/mol%); preferably 80/20 to 94/6 (mol%/mol%). In the case where the raw material of PHAis a mixture of two or more PHAs, the average content ratio refers to the mole ratio of each monomer contained in the entire mixture. The average content ratio of (3-hydroxybutyrate) and (3-hydroxycaproate) is 80/20 to 99/1, preferably 75/25 to 96/4.

The PHA is particularly preferably produced by microorganisms. In the PHA produced by microorganisms, all 3-hydroxyalkanoate structural units are contained in the form of (R)3-hydroxyalkanoate structural unit.

Furthermore, the weight average molecular weight of the PHA is: 100,000 to 1,000,000; preferably 200,000 to 900,000; further preferably 300,000 and 800,000.

As a preferred solution, the granulation processing method of degradable material specifically includes:
a first step, adding the PHA to the hopper of granulation equipment, and setting each temperature section;
a second step, subjecting the powder to heating and melting, pre-crystallization sequentially, and subjecting the resulted melt to extrusion from the extruder head; and
a third step, cutting the extruded melt into granules after post-processing to obtain granules;
wherein, the temperature for heating and melting is set at 40°C to 180°C; the extrusion temperature of the extruder head is set at 140°C to 200°C; and the temperature of the post-processing is controlled between 30°C to 80°C.

In the first step, the granulation equipment is a screw extruder, which can be a twin-screw extruder, a triple-screw extruder, or a planetary screw extruder, preferably a twin-screw extruder.

Preferably, in the third step, cutting into granules is carried out by using a drawn strip cutting mode.

Preferably, the pre-crystallization is carried out in a temperature setting section in front of the head of the screw extruder.

More preferably, the pre-crystallization is carried out in 2 to 3 temperature zones in front of the head of the screw extruder.

In the present application, for different screw extruders, the temperature can be set in sections according to the design of screw threads; wherein, the melting is carried out in the zone where the material is melted and plasticized, which is generally the entire temperature control region before the pre-crystallization temperature zone. For example, for screw extruders with eleven zones, it is preferable to set the melting temperature and perform melting in zones one to nine.

The pre-crystallization is carried out in 2 to 3 temperature zones in front of the head of the screw extruder. For example, for screw extruders with eleven zones, it is preferable to set the pre-crystallization temperature and perform pre-crystallization in zones ten to eleven.

The extrusion is carried out through the extruder head section.

As a preferred solution, the granulation processing method is completed through a twin-screw extruder with a length-to-diameter ratio ≥44.

More preferably, in the twin-screw extruder, the thread is designed with low shear force, which is more conducive to reducing the shear force and thereby reducing the melt index.

As a preferred solution, the granules obtained through extrusion are subjected to constant temperature crystallization at 30°C to 80°C. This can further speed up the crystallization rate of the material.

In a specific embodiment, the granules can be obtained by extrusion using a drawn strip cutting mode.

In a specific embodiment, the temperature during constant temperature crystallization can be controlled through a temperature-controlled water tank or a hot air box.

A person skilled in the art can combine the above solutions with common knowledge to obtain preferred embodiments of the granulation processing method of degradable materials described in the present application.

The present application further provides a molded body prepared through the aforementioned granulation processing method of degradable materials.

The PHA of the pure granular without additives in the molded body of the present application can take into account the expandability and appearance of the material itself, while also facilitate the control of processing costs.

The beneficial effects of the present application are as follows:
The processing and granulation method of the present application can accelerate the crystallization speed online and quickly obtain non-adhesive granules without adding additives by performing extrusion after pre-crystallization at 20°C below the Tm to 60°C below the Tm of the PHA, which greatly shortens the crystallization time and facilitates transportation and subsequent processing.

At the same time, the above methods do not require changes to the current extrusion granulation equipment, thereby there will be no additional increase in equipment costs. Moreover, due to the lower processing temperature, the electric heating power and heat exchange power are reduced, resulting in lower energy consumption, which is conducive to promotion and application in practical production.

The present application also has certain guiding reference significance for the subsequent processing and molding of complex objects, including pipes, tableware, various plates, sheets, films, various bottles, non-woven fabrics, textiles, various foam molded products, etc.

### Brief Description of the Drawings

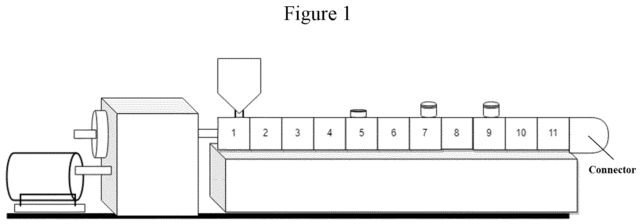

Figure 1 is a schematic diagram of the temperature zones of a granulator for granulation processing in Example 1.

In the figure, 1 to 11 represents different temperature zone sections, and the connector is the head extrusion section.

### Specific Modes for Carrying Out the Embodiments

The following Examples are used to illustrate the present application, but are not intended to limit the scope of the application thereto.

If the specific techniques or conditions are not specified in the Examples, the techniques or conditions described in literatures, or the product manual in the art shall be followed. The reagents or instruments used without specifying the manufacturer are conventional products that can be purchased commercially through regular channels.

The equipment and raw materials used in the Examples and Comparative Examples are as follows:

### 1) Equipment

Mixing equipment: blending at room temperature using a high-speed mixer.

Granulation equipment: commonly used extrusion granulation equipment in the art can be used, for example parallel co-rotating twin-screw extruders, parallel counter-rotating twin-screw extruders, conical twin-screw extruders with different length-to-diameter ratios, as well as single screw extruders; the composition was placed in the feeding hopper or the loss-in-weight scale of the twin-screw extruder; the temperature of the extrusion granulation equipment is correspondingly set according to the heating and melting, pre-crystallization, and extruder head extrusion processes, respectively, wherein the main engine speed is 50 to 500 r/min, and the feeding amount or production capacity is adjusted according to the actual production status; subsequently, granulation is carried out through constant temperature crystallization using a drawn strip cutting mode; and the prepared granules are dried using an air blast drying oven to eliminate the effect of moisture on granule properties and to completely crystallize the granules.

### 2) Raw materials

### <PHA powder>

Poly(3-hydroxybutyrate-co-3-hydroxycaproate), hereinafter referred to as PHBH, trademark: BP330, parameter: the content of 3HB(3-hydroxybutyrate unit) is 94%; Beijing Bluepha Microbiology Technology Co., Ltd.

Poly(3-hydroxybutyrate-co-3-hydroxyhexanoate), hereinafter referred to as PHBH, trademark: BP350, parameter: the content of 3HB(3-hydroxybutyrate unit) is 89%; Beijing Bluepha Microbiology Technology Co., Ltd.

Poly(3-hydroxybutyrate-co-3-hydroxyvalerate), hereinafter referred to as PHBV, is commercially available.

Poly(3-hydroxybutyrate), hereinafter referred to as PHB, is commercially available.

The following is a description of the granulation processing method of degradable materials in the present application with reference to Figure 1. The online pre-crystallization of the PHA material is carried out by regulating the pre-crystallization temperature sections before the extrusion of the extruder head, thus rapidly cooling and preparing to obtain the granules.

Specifically, the granulation processing method includes:
a first step, PHA powder was added into the hopper of a twin-screw extruder (JSH-65, Nanjing Mianya Machinery Manufacturing Co., Ltd) (see above the section marked as 1 in Figure 1), and setting of each temperature section was conducted.

In a specific embodiment, structures for powder mixing and forced feeding and the like can be added to the hopper.

A second step, the powder was sequentially subjected to heating and melting at 40°C to 180°C, pre-crystallization (20°C below the Tm to 60°C below the Tm), and extruder head extrusion at 140°C to 200°C to extrude melt from the extruder head.

Wherein, the pre-crystallization section is the temperature setting section in front of the head of the screw extruder, and in the present Example, 2 to 3 temperature zones in front of the head of the screw extruder were used.

Specifically, in terms of temperature control, the temperatures of the following processes were controlled respectively: heating and melting section, pre-crystallization section, and extruder head section.
The heating and melting section is a zone where materials are melted, which is the entire temperature-controlled region before the pre-crystallization zone;
the pre-crystallization section is preferably a setting section of 2 to 3 temperature zones in front of the screw extruder head, i.e., a setting range of zones 10 to 11 (the corresponding heating and melting sections are zones 1 to 9), or zones 9 to 11 (the corresponding heating and melting sections are zones 1 to 8); and
the extrusion section of the extruder head is the extruder head section (i.e. the subsequent section of the connector).

A third step, the extruded melt was cut into granules after post-processing to obtain granules. Specifically, granulation was achieved after the post-processing step of a constant temperature crystallization stage.

After extruding the granular materials by using a drawn strip cutting mode, constant temperature crystallization was performed by temperature control, including a temperature control water tank or a hot air box, the temperature of which was both maintained at a constant temperature of 30°C to 80°C (i.e. the water bath time in Table 1, the same below). The shorter the water bath time, the shorter the crystallization molding time of the granules. The above post-processing process helps to further accelerate the crystallization rate of the melt.

### Testing method of Tm:

Differential scanning calorimetry (DSC) was used to measure the melting and crystallization temperature and enthalpy in accordance with the Chinese National Standard GB/T 19466.3-2004.

Differential scanning calorimeter (DSC25 type manufactured by TA Instrument) was used, 2 to 10 mg of the raw materials was raised from -50°C to 180°C at a temperature rise rate of 10°C/min.

After the heat history is eliminated by the first temperature rise, the temperature at the endothermic peak of the second temperature rise is taken as Tm.

The Tm values of the PHA in the Examples were as follows:
about 140°C in Example 1 and Example 6; about 130°C to 140°C in Example 2; about 170°C in Example 3; about 175°C in Example 4 and Example 7; and about 130°C to 140°C in Example 5 and Example 8.

### Example 1

PHBH (BP330) powder was added to a twin-screw extruder with a screw length-to-diameter ratio of 44 and forced feeding. The main feeding speed was 15 r/min and the main engine speed was 400 r/min.

In terms of temperature control, the temperatures of the following processes were controlled respectively: heating and melting section, pre-crystallization section, and extruder head section.
The heating and melting section is a zone where materials are melted, which is the entire temperature-controlled region in a setting range from zone 1 to zone 9 before the pre-crystallization zone;
The pre-crystallization section is the two temperature zone setting sections in front of the screw extruder head, i.e., the setting range from zone 10 to zone 11;

The extrusion section of the extruder head is the extruder head section.

The specific settings were as follows:
The temperature of each zone of the twin-screw extruder was set as follows: 40°C in zone 1, 80°C in zone 2, 120°C in zone 3, 140°C in zone 4, 160°C in zone 5, 160°C in zone 6, 150°C in zone 7, 140°C in zone 8, 140°C in zone 9, 110°C in zone 10, 110°C in zone 11, and 140°C in the extruder head.

After melting and extrusion, the post-processing of the constant temperature crystallization section was carried out at 55°C, and finally, granulation was performed to obtain pure PHBH granules.

Wherein, the pre-crystallization temperature was 110°C.

### Example 2

PHBH of trademarks BP330 and BP350, with a weight ratio of 6:4, were blended. A twin-screw extruder model with a length-to-diameter ratio of 44 was used. The main feeding speed was 15 r/min, and the main engine speed was 400 r/min. The temperature settings for each zone were as follows: 40°C in zone 1, 80°C in zone 2, 120°C in zone 3, 120°C in zone 4, 140°C in zone 5, 160°C in zone 6, 165°C in zone 7, 160°C in zone 8, 140°C in zone 9, 110°C in zone 10, 110°C in zone 11, and 145°C in the extruder head. Finally, after melting and extrusion, a further constant temperature crystallization was carried out through a water tank at 55°C. The pure material granules were obtained through a granulator.

Wherein, the pre-crystallization temperature was 110°C.

### Example 3

Pure powder of PHB, and a twin-screw extruder model with a length-to-diameter ratio of 44 were used. The main feeding speed was 15 r/min, and the main engine speed was 400 r/min. The temperature settings for each section were as follows: 40°C in zone 1, 80°C in zone 2, 120°C in zone 3, 140°C in zone 4, 160°C in zone 5, 180°C in zone 6, 175°C in zone 7, 160°C in zone 8, 140°C in zone 9, 120°C in zone 10, 120°C in zone 11, and 160°C in the extruder head. Finally, after melting and extrusion, a further constant temperature crystallization was carried out through a water tank at 55°C. The pure material granules were obtained through a granulator.

Wherein, the pre-crystallization temperature was 120°C.

### Example 4

Pure powder of PHBV, and a twin-screw extruder model with a length-to-diameter ratio of 44 were used. The main feeding speed was 15 r/min, and the main engine speed was 400 r/min. The temperature settings for each section were as follows: 60°C in zone 1, 80°C in zone 2, 120°C in zone 3, 140°C in zone 4, 160°C in zone 5, 180°C in zone 6, 175°C in zone 7, 160°C in zone 8, 140°C in zone 9, 120°C in zone 10, 120°C in zone 11, and 160°C in the extruder head. Finally, after melting and extrusion, a further constant temperature crystallization was carried out through a water tank at 55°C. The pure material granules were obtained through a granulator.

Wherein, the pre-crystallization temperature was 120°C.

### Example 5

Granulation was carried out using PHBH of trademark BP350 (HH content of 11%). A twin-screw extruder model with a length-to-diameter ratio of 44 was used. The main feeding speed was 15 r/min, and the main engine speed was 400 r/min. The temperature settings for each zone were as follows: 40°C in zone 1, 80°C in zone 2, 120°C in zone 3, 120°C in zone 4, 140°C in zone 5, 160°C in zone 6, 165°C in zone 7, 160°C in zone 8, 140°C in zone 9, 110°C in zone 10, 110°C in zone 11, and 145°C in the extruder head. Finally, after melting and extrusion, a further constant temperature crystallization was carried out through a water tank at 55°C. The pure material granules were obtained through a granulator.

The pre-crystallization temperature was 110°C.

### Example 6

PHBH (BP330) powder was added to a twin-screw extruder with a screw length-to-diameter ratio of 44 and forced feeding. The main feeding speed was 15 r/min and the main engine speed was 400 r/min.

The temperature settings for each zone were as follows: 40°C in zone 1, 60°C in zone 2, 100°C in zone 3, 120°C in zone 4, 120°C in zone 5, 140°C in zone 6, 160°C in zone 7, 160°C in zone 8, 140°C in zone 9, 115°C in zone 10, 115°C in zone 11, and 140°C in the extruder head. Finally, after melting and extrusion, a further constant temperature crystallization was carried out through a water tank at 55°C. The pure material granules were obtained through a granulator.

Wherein, the pre-crystallization temperature was 115°C.

### Example 7

Pure powder of PHBV, and a twin-screw extruder model with a length-to-diameter ratio of 44 were used. The main feeding speed was 15 r/min, and the main engine speed was 400 r/min. The temperature settings for each section were as follows: 60°C in zone 1, 80°C in zone 2, 120°C in zone 3, 140°C in zone 4, 140°C in zone 5, 160°C in zone 6, 160°C in zone 7, 165°C in zone 8, 140°C in zone 9, 140°C in zone 10, 140°C in zone 11, and 160°C in the extruder head. Finally, after melting and extrusion, a further constant temperature crystallization was carried out through a water tank at 55°C. The pure material granules were obtained through a granulator.

Wherein, the pre-crystallization temperature was 140°C.

### Example 8

Granulation was carried out using PHBH of trademark BP350 (HH content of 11%). A twin-screw extruder model with a length-to-diameter ratio of 44 was used. The main feeding speed was 15 r/min, and the main engine speed was 400 r/min. The temperature settings for each zone were as follows: 40°C in zone 1, 80°C in zone 2, 120°C in zone 3, 120°C in zone 4, 140°C in zone 5, 160°C in zone 6, 165°C in zone 7, 160°C in zone 8, 140°C in zone 9, 100°C in zone 10, 100°C in zone 11, and 140°C in the extruder head. Finally, after melting and extrusion, a further constant temperature crystallization was carried out through a water tank at 55°C. The pure material granules were obtained through a granulator.

Wherein, the pre-crystallization temperature was 100°C.

The following Comparative Examples adopt the granulation preparation method in the prior art, wherein Comparative Examples 1-5 do not add additives; and Comparative Examples 6-8 add with additives. The preparation method is as follows:
A first step, the material was added into the hopper of a twin-screw extruder for granulation processing, and each temperature section was set;
A second step, the powder was sequentially subjected to heating and melting at 40°C to 200°C; and extruder head extrusion at 150°C to 220°C to extrude melt from the extruder head to obtain granules;
A third step, after extruding the granular material by using a drawn strip cutting mode, the granules were obtained through post-processing at 30°C to 80°C. The commonly used temperature can be 40°C to 60°C.

### Comparative Example 1

Granulation was carried out using PHBH of trademark BP330, and a twin-screw extruder model with a length-to-diameter ratio of 44 was used. The main feeding speed was 15 r/min, and the main engine speed was 400 r/min. The temperature settings for each zone were as follows: 40°C in zone 1, 80°C in zone 2, 100°C in zone 3, 120°C in zone 4, 120°C in zone 5, 140°C in zone 6, 160°C in zone 7, 160°C in zone 8, 165°C in zone 9, 165°C in zone 10, 170°C in zone 11, and 170°C in the extruder head. Finally, after melting and extrusion, a further constant temperature crystallization was carried out through a water tank at 55°C. The pure material granules were obtained through a granulator. The processing temperature of the present Comparative Example cannot allow normal granulation, which will cause the phenomenon of unstable melt extrusion and roll sticking.

### Comparative Example 2

PHBH of trademarks BP330 and BP350 with a weight ratio of 6:4 were blended. Atwin-screw extruder model with a length-to-diameter ratio of 44 was used. The main feeding speed was 15 r/min, and the main engine speed was 400 r/min. The temperature settings for each zone were as follows: 40°C in zone 1, 80°C in zone 2, 120°C in zone 3, 120°C in zone 4, 140°C in zone 5, 160°C in zone 6, 165°C in zone 7, 165°C in zone 8, 160°C in zone 9, 160°C in zone 10, 160°C in zone 11, and 170°C in the extruder head. Finally, after melting and extrusion, a further constant temperature crystallization was carried out through a water tank at 55°C. The pure material granules were obtained through a granulator. The constant temperature crystallization time of the present Comparative Example is significantly longer than that of the Examples of the present application.

### Comparative Example 3

Pure powder of PHB, and a twin-screw extruder model with a length-to-diameter ratio of 44 were used. The main feeding speed was 15 r/min, and the main engine speed was 400 r/min. The temperature settings for each section were as follows: 40°C in zone 1, 80°C in zone 2, 120°C in zone 3, 140°C in zone 4, 160°C in zone 5, 160°C in zone 6, 175°C in zone 7, 175°C in zone 8, 180°C in zone 9, 180°C in zone 10, 200°C in zone 11, and 200°C in the extruder head. Finally, after melting and extrusion, a further constant temperature crystallization was carried out through a water tank at 55°C. The pure material granules were obtained through a granulator. The constant temperature crystallization time of the present Comparative Example is significantly longer than that of the Examples of the present application.

### Comparative Example 4

Pure powder of PHBV, and a twin-screw extruder model with a length-to-diameter ratio of 44 was used. The main feeding speed was 15 r/min, and the main engine speed was 400 r/min. The temperature settings for each section were as follows: 60°C in zone 1, 80°C in zone 2, 120°C in zone 3, 140°C in zone 4, 140°C in zone 5, 160°C in zone 6, 160°C in zone 7, 165°C in zone 8, 165°C in zone 9, 180°C in zone 10, 180°C in zone 11, and 180°C in the extruder head. Finally, after melting and extrusion, a further constant temperature crystallization was carried out through a water tank at 55°C. The pure material granules were obtained through a granulator. The constant temperature crystallization time of the present Comparative Example is significantly longer than that of the Examples of the present application.

### Comparative Example 5

Granulation was carried out using PHBH of trademark BP350 (HH content of 11%). A twin-screw extruder model with a length-to-diameter ratio of 44 was used. The main feeding speed was 15 r/min, and the main engine speed was 400 r/min. The temperature settings for each zone were as follows: 40°C in zone 1, 80°C in zone 2, 120°C in zone 3, 120°C in zone 4, 140°C in zone 5, 160°C in zone 6, 165°C in zone 7, 160°C in zone 8, 160°C in zone 9, 170°C in zone 10, 170°C in zone 11, and 165°C in the extruder head. Finally, after melting and extrusion, a further constant temperature crystallization was carried out through a water tank at 55°C. The pure material granules were obtained through a granulator. The constant temperature crystallization time of the present Comparative Example is significantly longer than that of the Examples of the present application.

### Comparative Example 6

PHBH of trademark BP330 was used, and additives were added for granulation processing. Additives: behenic acid amide (1%), antioxidant 168 (0.2%), antioxidant 1076 (0.2%), and pentaerythritol (0.5%). A twin-screw extruder model with a length-to-diameter ratio of 44 was used. The main feeding speed was 15 r/min, and the main engine speed was 400 r/min. The temperature settings for each zone were as follows: 40°C in zone 1, 60°C in zone 2, 100°C in zone 3, 120°C in zone 4, 120°C in zone 5, 140°C in zone 6, 160°C in zone 7, 160°C in zone 8, 165°C in zone 9, 165°C in zone 10, 170°C in zone 11, and 170°C in the extruder head. Finally, after melting and extrusion, a further constant temperature crystallization was carried out through a water tank at 55°C. The pure material granules were obtained through a granulator. The constant temperature crystallization time of the present Comparative Example is significantly longer than that of the Examples of the present application.

### Comparative Example 7

Pure powder of PHBV was used, and additives was added for granulation processing. Additives: behenic acid amide (1%), antioxidant 168 (0.2%), antioxidant 1076 (0.2%), and pentaerythritol (0.5%). A twin-screw extruder model with a length-to-diameter ratio of 44 was used. The main feeding speed was 15 r/min, and the main engine speed was 400 r/min. The temperature settings for each section were as follows: 60°C in zone 1, 80°C in zone 2, 120°C in zone 3, 140°C in zone 4, 140°C in zone 5, 160°C in zone 6, 160°C in zone 7, 165°C in zone 8, 165°C in zone 9, 180°C in zone 10, 180°C in zone 11, and 180°C in the extruder head. Finally, after melting and extrusion, a further constant temperature crystallization was carried out through a water tank at 55°C. The pure material granules were obtained through a granulator. The constant temperature crystallization time of the present Comparative Example is significantly longer than that of the Examples of the present application.

### Comparative Example 8

PHBH of trademark BP350 (HH content of 11%) was used, and additives were added for granulation processing. Additives: behenic acid amide (1%), antioxidant 168 (0.2%), antioxidant 1076 (0.2%), and pentaerythritol (0.5%). A twin-screw extruder model with a length-to-diameter ratio of 44 was used. The main feeding speed was 15 r/min, and the main engine speed was 400 r/min. The temperature settings for each section were as follows: 40°C in zone 1, 80°C in zone 2, 120°C in zone 3, 120°C in zone 4, 140°C in zone 5, 160°C in zone 6, 165°C in zone 7, 160°C in zone 8, 160°C in zone 9, 170°C in zone 10, 170°C in zone 11, and 165°C in the extruder head. Finally, after melting and extrusion, a further constant temperature crystallization was carried out through a water tank at 55°C. The pure material granules were obtained through a granulator. The constant temperature crystallization time of the present Comparative Example is significantly longer than that of the Examples of the present application.

The processing situation of each Example and Comparative Example is shown in Table 1 below.

**Table 1**

| | Example | | | | | | | | Comparative Example | | | | | | | |
|---|---|---|---|---|---|---|---|---|---|---|---|---|---|---|---|---|
| Temperature zone | 1 | 2 | 3 | 4 | 5 | 6 | 7 | 8 | 1 | 2 | 3 | 4 | 5 | 6 | 7 | 8 |
| Zone 1/°C | 40 | 40 | 40 | 60 | 40 | 40 | 60 | 40 | 40 | 40 | 40 | 60 | 40 | 40 | 60 | 40 |
| Zone 2/°C | 80 | 80 | 80 | 80 | 80 | 60 | 80 | 80 | 80 | 80 | 80 | 80 | 80 | 60 | 80 | 80 |
| Zone 3/°C | 120 | 120 | 120 | 120 | 120 | 100 | 120 | 120 | 100 | 120 | 120 | 120 | 120 | 100 | 120 | 120 |
| Zone 4/°C | 140 | 120 | 140 | 140 | 120 | 120 | 140 | 120 | 120 | 120 | 140 | 140 | 120 | 120 | 140 | 120 |
| Zone 5/°C | 160 | 140 | 160 | 160 | 140 | 120 | 140 | 140 | 120 | 140 | 160 | 140 | 140 | 120 | 140 | 140 |
| Zone 6/°C | 160 | 160 | 180 | 180 | 160 | 140 | 160 | 160 | 140 | 160 | 160 | 160 | 160 | 140 | 160 | 160 |
| Zone 7/°C | 150 | 165 | 175 | 175 | 165 | 160 | 160 | 165 | 160 | 165 | 175 | 160 | 165 | 160 | 160 | 165 |
| Zone 8/°C | 140 | 160 | 160 | 160 | 160 | 160 | 165 | 160 | 160 | 165 | 175 | 165 | 160 | 160 | 165 | 160 |
| Zone 9/°C | 140 | 140 | 140 | 140 | 140 | 140 | 140 | 140 | 165 | 160 | 180 | 165 | 160 | 165 | 165 | 160 |
| Zone 10/°C | 110 | 110 | 120 | 120 | 110 | 115 | 140 | 100 | 165 | 160 | 180 | 180 | 170 | 165 | 180 | 170 |
| Zone 11/°C | 110 | 110 | 120 | 120 | 110 | 115 | 140 | 100 | 170 | 160 | 200 | 180 | 170 | 170 | 180 | 170 |
| Extruder head temperature /° C | 140 | 145 | 160 | 160 | 145 | 140 | 160 | 140 | 170 | 170 | 200 | 180 | 165 | 170 | 180 | 165 |
| Water bath temperature/° C | 55 | 55 | 55 | 55 | 55 | 55 | 55 | 55 | 55 | 55 | 55 | 55 | 55 | 55 | 55 | 55 |
| Water bath time/s | 20 | 15 | 60 | 30 | 20 | 25 | 10 | 20 | >300 | >300 | 120 | >300 | >300 | 60 | 30 | 60 |
| Difficulty of granulation processing | ○ | Δ | ○ | Δ | ○ | ○ | ○ | ○ | × | Δ | Δ | × | × | ○ | ○ | ○ |

In the table, regarding the difficulty of granulation processing:
∘: capable of continuous and stable granulation, cutting can be performed stably without sticking of granules.
Δ: the extrusion of extruder is stable and strip breakage is not prone to occurring during extrusion; the crystallization rate of the extruded strip is slow, and the granules will stick together, but can be roughly separated by vibration after a period of time.
×; the extrusion of extruder is unstable and strip breakage occurs during extrusion; the cooling rate of the extruded strip is slow and cutting for granulation cannot be performed; and granules stick together and cannot be separated.

According to the results in Table 1, it can be seen that:
(1) Examples 1-8 of the present application start pre-crystallization (cooling) from zone 9, and the prepared granules have a good molding effect, with short water bath time, and faster crystallization speed. However, Comparative Examples 1-5 use existing processing, in which zones 1 to 11 are gradual temperature rise process, and no pre-crystallization is performed (the temperature from Zone 9 to Zone 11 is above Tm+10). Comparative Examples 1-5 mainly rely on a water bath for crystallization, making the processing and granulation more difficult, and the crystallization time longer.
(2) Comparative Examples 6-8 use the methods in the prior art to prepare PHAby adding additives. Although they have a faster crystallization rate and better processing effect, it requires the addition of additives to achieve this. The preparation method of the present application does not require the addition of additives and achieves a crystallization rate and processing effect that are comparable to or even better than those of Comparative Examples 6-8.
(3) In Examples 1-8, when the monomer raw materials of the PHA are different, the pre-crystallization temperature is different. The pre-crystallization is performed at 20°C below the Tm to 60°C below the Tm of the PHA, which can all achieve better processing results. For example, for PHBH, the processing effect is better when the pre-crystallization temperature is 100°C-140°C, and more preferably, the processing effect can be further improved when the pre-crystallization temperature is 100°C to 120°C.

Although the present application has been described in detail with general descriptions and specific embodiments above, it is obvious to a person skilled in the art that some modifications or improvements can be made based on the present application. Therefore, these modifications or improvements made without deviating from the spirit of the present application all fall within the scope of protection claimed by the present application.

### Industrial Applicability

The present application provides a granulation processing method of degradable materials and a molded body prepared therefrom. The granulation processing method of degradable materials includes: after the PHA powder is melted, pre-crystallization is carried out at 20°C below the Tm of the PHA to 60°C below the Tm of the PHA, and then extrusion for crystallization and granulation is carried out. The processing and granulation method of the present application can accelerate the crystallization speed online and quickly obtain non-adhesive granules without adding additives by performing extrusion after pre-crystallization at 20°C below the Tm of the PHA to 60°C below the Tm of the PHA, which greatly shortens the crystallization time and facilitates transportation and subsequent processing. At the same time, the method of the present application does not require changes to the current extrusion granulation equipment, thereby there will be no additional increase in equipment costs. Moreover, due to the lower processing temperature, the electric heating power and heat exchange power are reduced, resulting in lower energy consumption, which is conducive to promotion and application in practical production, and has good economic value and application prospects.

## Claims

1. A granulation processing method of degradable materials, **characterized by** comprising:
melting polyhydroxyalkanoate, then subjecting the resultant to pre-crystallization at a temperature of 20°C below the Tm of the polyhydroxyalkanoate to 60°C below the Tm of the polyhydroxyalkanoate, and then subjecting the resultant to extrusion for crystallization and granulation.

2. The granulation processing method of degradable materials of claim 1, wherein the pre-crystallization is carried out at a temperature of 20°C below the Tm of the polyhydroxyalkanoate to 40°C below the Tm of the polyhydroxyalkanoate.

3. The granulation processing method of degradable materials of claim 1, wherein the polyhydroxyalkanoate is a polymer containing a 3-hydroxyalkanoate structural unit and/or 4-hydroxyalkanoate structural unit.

4. The granulation processing method of degradable materials of claim 3, wherein the polyhydroxyalkanoate is a polymer containing a 3-hydroxybutyrate structural unit;
wherein, the polymer containing a 3-hydroxybutyrate structural unit is a homopolymer containing only a 3-hydroxybutyrate structural unit, or a copolymer containing a 3-hydroxybutyrate structural unit and other alkanoate structural unit, the other alkanoate structural unit is at least one selected from 3-hydroxypropionate, 3-hydroxyvalerate, 3-hydroxycaproate, 3-hydroxyheptanoate, 3-hydroxyoctanoate, 3-hydroxynonanoate, 3-hydroxydecanoate, 3-hydroxyundecanoate and 4-hydroxybutyrate.

5. The granulation processing method of degradable materials of claim 4, wherein the polyhydroxyalkanoate is at least one selected from poly(3-hydroxybutyrate), poly(3-hydroxybutyrate-co-3-hydroxypropionate), poly(3-hydroxybutyrate-co-3-hydroxyvalerate), poly(3-hydroxybutyrate-co-3-hydroxyvalerate-co-3-hydroxycaproate), poly(3-hydroxybutyrate-co-3-hydroxycaproate), poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3 -hydroxyundecanoate), and poly(3 -hydroxybutyrate-co-4-hydroxybutyrate).

6. The granulation processing method of degradable materials of claim 5, wherein the polyhydroxyalkanoate is poly(3-hydroxybutyrate-co-3-hydroxycaproate).

7. The granulation processing method of degradable materials of claim 6, wherein the pre-crystallization is carried out at 100°C to 140°C.

8. The granulation processing method of degradable materials of any one of claims 1 to 7, **characterized by** comprising:
a first step: adding polyhydroxyalkanoate to the hopper of granulation equipment, and setting the temperature section for heating and melting, pre-crystallization, and extruder head extrusion;
a second step: subjecting the powder to heating and melting, pre-crystallization sequentially, and subjecting the resulted melt to extrusion from the extruder head; and
a third step: cutting the extruded melt into granules after post-processing to obtain granules;
wherein, the temperature for heating and melting is set at 40°C to 180°C; the pre-crystallization temperature is 20°C below the Tm of the polyhydroxyalkanoate to 60°C below the Tm of the polyhydroxyalkanoate; the extrusion temperature of the extruder head is set at 140°C to 200°C; and the temperature of the post- processing is controlled between 30°C to 80°C.

9. The granulation processing method of biodegradable materials of claim 8, wherein in the first step, the granulation equipment is a screw extruder.

10. A molded body, wherein the molded body is prepared by the granulation processing method of degradable materials of any one of claims 1 to 9.
